Europäisches Patentamt

European Patent Office

Office européen des brevets

(11) Publication number: **0 445 798 A1**

# EUROPEAN PATENT APPLICATION

(21) Application number: 91103468.4

(51) Int. Cl.5: **A01N 63/04**

(22) Date of filing: 07.03.91

(30) Priority: 07.03.90 CA 2011705

(43) Date of publication of application:
11.09.91 Bulletin 91/37

(84) Designated Contracting States:
BE DE ES FR GB IT NL

(71) Applicant: **HER MAJESTY IN RIGHT OF CANADA AS REPRESENTED BY AGRICULTURE CANADA**
**Sir John Carling Building, 7th Floor**
**Ottawa, Ontario K1A 0C5(CA)**

(72) Inventor: **Jarvis, William R.**
**107 Church Street**

Harrow, Ontario N0R 1G0(CA)
Inventor: **Shaw, Lindsey A.**
**37 Forbes Avenue**
**Guelph, Ontario N1G 1G2(CA)**
Inventor: **Traquair, James A.**
**268 Taylor Road**
**Harrow, Ontario N0R 1G0(CA)**
Inventor: **Elmhirst, Janice F.**
**108 Flamingo Street**
**Blenheim, Ontario N0P 1A0(CA)**

(74) Representative: **Witte, Alexander, Dr.-Ing. et al**
**Augustenstrasse 7**
**W-7000 Stuttgart 1(DE)**

(54) Method and composition for biological control of bacterial and fungal plant diseases.

(57) A composition for the control of bacterial and fungal plant diseases, comprising an effective amount of spores of one or more of the yeast species Stephanoascus flocculosus and Stephanoascus rugulosus, and spores being suspended in an agronomically acceptable carrier, and a method of applying same.

FIG.5 — S.RUGULOSUS

FIG.6 — S. FLOCCULOSUS

POWDERY MILDEW COLONIZATION vs TEMPERATURE (°C)

## FIELD OF THE INVENTION

The present invention relates to a composition and method for the control of bacterial and fungal plant diseases, such as powdery mildew.

## BACKGROUND OF THE INVENTION

Several commercially grown plants such as cucumbers and roses suffer from a variety of fungal and bacterial plant diseases. Such plant diseases often attack the leaves, roots or stems of the plant, and the wide spread damage caused by these plant parasites often results in lower yields. Plant parasites such as the fungus Sphaerotheca fuliginea, which causes the plant disease powdery mildew, have traditionally been controlled by chemical agents such as fungicides. These fungicides are typically applied to the plants by spraying or dusting, thereby depositing onto the surface of the plants a quantity of the chemical agent. Due to the toxic effects of these chemical fungicides, their use tends to be limited. Cucumber plants in particular are susceptible to powdery mildew, especially after the cucumbers begin to form, but the use of chemical fungicides to control powdery mildew on cucumbers is ineffective because the fungicide cannot be applied to the cucumber less than one month before harvesting. Because cucumber plants grown under greenhouse conditions yield fruit on a continuous basis, the use of such chemical fungicides is precluded. Furthermore, chemical agents for the control of plant diseases pose certain environmental hazards which are of growing concern in today's society.

In response to the above concerns about chemical agents, biological control agents have been proposed as an alternative way of controlling plant parasites. Taber et al., Canadian patent No. 1,161,753 discloses a method of controlling Cercospora related plant diseases by application of certain species of micro-organisms of the genus Hansfordia. Richard, Canadian Patent No. 1,106,201, discloses a biological control agent comprising spores from certain species of the Trichoderma genus. Hoch, H.C. and Provvidenti, R. in a paper entitled "Mycoparasitic relationships: cytology of the Sphaerotheca fuliginea - Tilletiopsis sp. interaction" (Phytopathology 69, 359-362) disclose the control of Sphaerotheca fuliginea on cucumber leaf by the application of vital spores of Tilletiopsis sp. Hijwegen, T. in a paper entitled "Effect of Seventeen Fungicolous Fungi on Sporulation of Cucumber Powdery Mildew", Neth. J. Path. 94:185-190 discloses the use of hyperparasites for the treatment of cucumber powdery mildew.

Biological control agents such as hyperparasites can be both more effective as well as safer than chemical agents for the treatment of certain plant diseases. These biological control agents usually have fewer toxic side effects and often do not pose a significant threat to the environment. However, known biocontrol agents tend to be effective against only a few species of disease causing organisms. Furthermore, hyperparasites such as Tilletiopsis often suffer from environmental requirements and other drawbacks which limit their use as biocontrol agents. For example, many hyperparasites cannot live saprophytically on the plants; hence their effectiveness as biocontrol agents is short term. Further, many of these hyperparasites are slow acting even under ideal conditions.

## SUMMARY OF THE INVENTION

The present inventors have found that two relatively new species, Stephanoascus flocculosus and Stephanoascus rugulosus, are effective in controlling powdery mildew plant diseases in cucumber, including powdery mildew caused by Sphaerotheca fuliginea. When spores of these two species land on a cucumber plant infected with Sphaerotheca fuliginea, they germinate and begin to antagonize Sphaerotheca fuliginea. It is believed that the mature Stephanoascus flocculosus and Stephanoascus rugulosus secrete an enzyme or toxin (antibiotic) which interferes with the growth of Sphaerotheca fuliginea.

The inventors have also found that the two species are effective in controlling powdery mildews in a variety of plants including roses infected with Sphaerotheca pannosa var. rosae. Furthermore, in-vitro tests have shown that the species Stephanoascus flocculosus and Stephanoascus rugulosus are effective in controlling a wide variety of fungal and bacterial plant diseases.

Accordingly, the invention relates to the use of a composition for the control of powdery mildew plant diseases in cucumbers and roses, said composition comprises spores of Stephanoascus flocculosus and/or Stephanoascus rugulosus together with an appropriate carrier such as water. The carrier is selected so as to facilitate the application of the spores onto the plants to be treated by either spraying, dusting, dipping or some other suitable method.

The invention also relates to a method for the control of powdery mildew in cucumbers and roses by application of this composition onto the plants.

The invention also relates to the use of this composition for the control of powdery mildew and other fungal and bacterial plant diseases in a variety of different plant species.

Finally, the invention relates to a method of controlling powdery mildew and other fungal and bacterial plant diseases on a variety of plant species by application of spores of either Stephanoascus flocculosus or Stephanoascus rugulosus or both together with an appropriate carrier, onto the plate.

In preferred embodiments of the present invention, the spore concentration of the composition is between about $1\times10^5$ to about $1\times10^7$ spores per ml of composition. Ideally, the composition has a spore concentration of about $1\times10^6$ spores per ml of composition. The carrier is preferably water; however, other aqueous solutions such as a water gelatine solution or a water glycerol solution could be used as a carrier. The carrier may also take the form of a dry powder. The spores themselves are preferably asexual spores (conidia).

## BRIEF DESCRIPTION OF THE DIAGRAMS

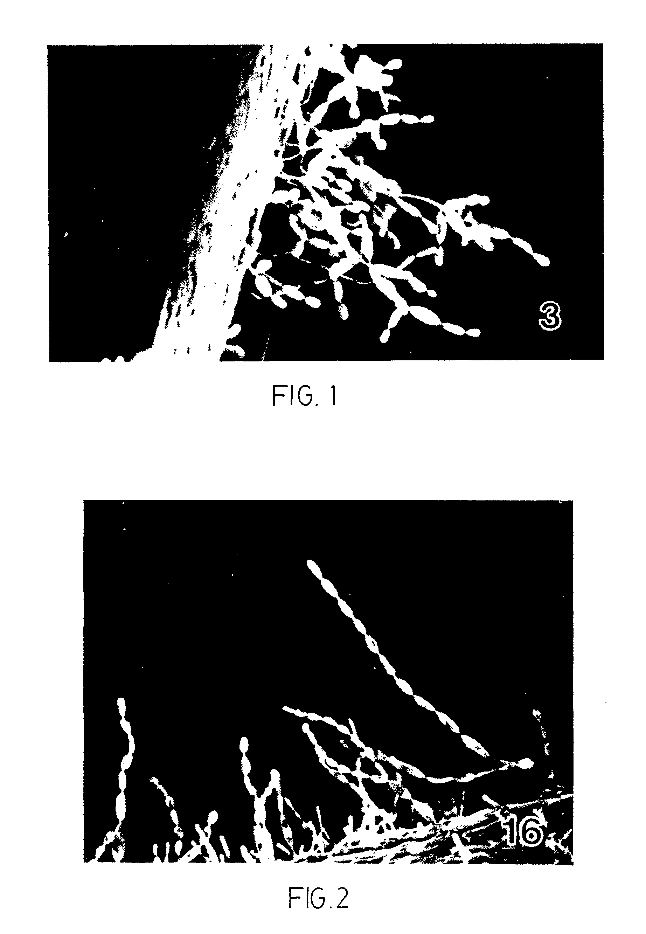

Figure 1 is a photo-micrograph of Stephanoascus flocculosus, magnification 960x.

Figure 2 is a photo-micrograph of Stephanoascus rugulosus, magnification 960x.

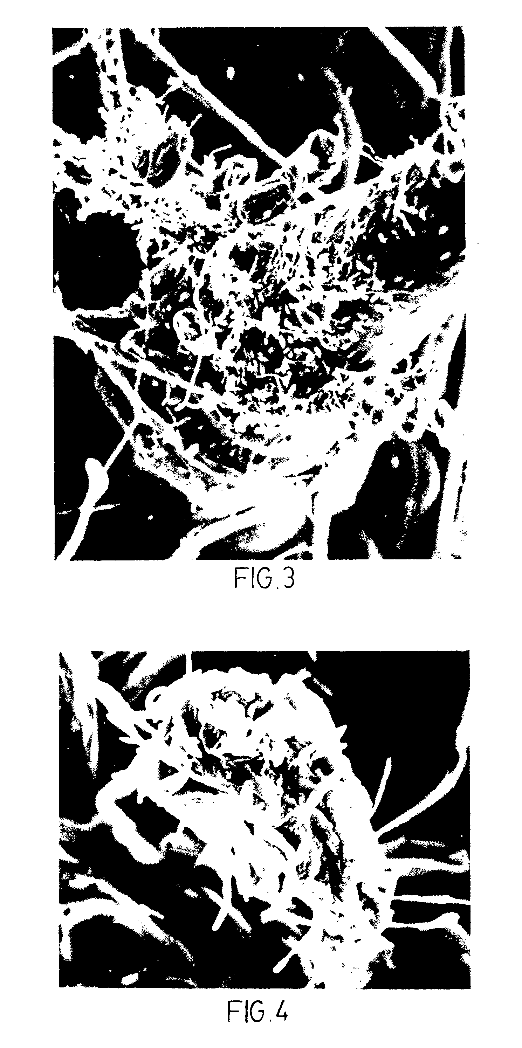

Figure 3 is a photo-micrograph of Sphaerotheca fuliginea colonized by Stephanoascus flocculosus at the base of a cucumber leaf hair.

Figure 4 is a photo-micrograph of a collapsed conidium of Sphaerotheca fuliginea covered with Stephanoascus rugulosus conidia and mycelium.

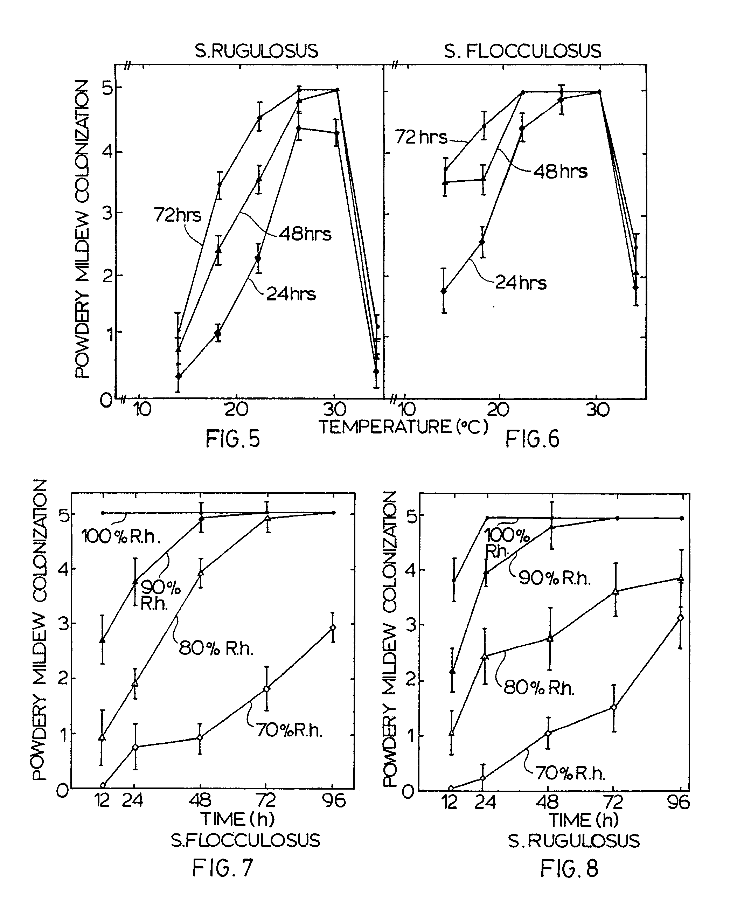

Figure 5 is graph depicting the colonization of powdery mildew as a function of temperature for Stephanoascus rugulosus.

Figure 6 is a graph depiction of powdery mildew colonization as a function of temperature for Stephanoascus flocculosus.

Figure 7 is a graphic representation of the influence of relative humidity on the colonization of Sphaerotheca fuliginea by Stephanoascus flocculosus.

Figure 8 is a graphic representation of the influence of relative humidity on the colonization of Sphaerotheca fuliginea by Stephanoascus rugulosus.

## DETAILED DESCRIPTION OF THE INVENTION

Stephanoascus is a genus of yeast like epiphytes which in culture produce hat shaped ascospores. Stephanoascus flocculosus and Stephanoascus rugulosus were two species isolated by Traquair et al (Traquair, J.A., Shaw, L.A. and Jarvis, W.R., 1988, New species of Stephanoascus with Sporthrix anamorphs, Can. J. Bot., 66;962-933) from red clover leaves (Trifolium pratense L) infected with mildew (Erysiphe Polygoni DC) and from senescent corn leaves (Zea mays L). which were covered with various hyphomycetes. Samples of Stephanoascus flocculosus and Stephanoascus rugulosus have been deposited with the American Type Culture Collection on 9 September, 1988 and are designated as ATCC 64874 and ATCC 64875 respectively. These species can exist in a telemorphic or anamorphic state. In the telemorphic states the species are classified under the genus Stephanoascus. However, in the anamorphic state the species display features characteristic of the Sporothrix genus and are classified as Sporothrix flocculosa and Sporothrix rugulosa respectively. The species isolated do not produce sexual reproductive structures consistently, normally reproducing via asexual spores or conidia.

The biotrophic plant pathogens Sphaerotheca fuliginea and Spaerotheca pannosa ver. rosae are two of may species responsible for the common group plant diseases, the powdery mildews. Powdery mildew manifests itself as a powdery residue on the surface of the leaves of the infected plants. The mycelium of the parasitic fungus spreads overp the surface of the leaf and produces powdery asexual spores or conidia. Depending on the extent of the infection, the presence of these parasites can seriously effect the functioning of the leaves and thereby effect the health of the plant, and considerably reduce econcmic yield and quality.

As can be seen from Figure 1, Stephanoascus flocculosus has a structure common to Emtomycetales, in particular Stephanoascus flocculosus has thread-like hypha and chains of approximately oval asexual spores. The structure of Stephanoascus rugulosus (as shown in Figure 2) is very similar to Stephanoascus flocculosus.

Cultures of Stephanoascus flocculosus and Stephanoascus rugulosus were grown on 2% ml extract (difco) agar (MEA) and 2% malt extract plus 0.3% yeast extract (difco) agar (MEYA). A composition comprising spores suspended in water was obtained from ten day old cultures by washing the colonies with sterile water. The spore concentrations of the compositions were adjusted to $10^6$ spores per ml of suspension. Although sexual spores might have been present in the composition, there is little doubt that the majority of spores were conidia.

In the preferred embodiment of the invention, the composition comprises the spores of one or both of the two Stephanoascus species suspended in some sort of agronomically acceptable carrier. In the preferred embodiment this agronomically acceptable carrier is water, but several aqueous solutions could be used. Particularly, aqueous solutions of water containing small concentrations of glycerol or gelatine may be particularly useful in the application of the composition to the plants.

According to the method of this invention, the composition is applied to plants which are susceptible to fungal and bacterial plant diseases such as powdery mildew. In the preferred embodiment of the method, the aqueous conidia suspension is sprayed onto the plants and the plants are then held under environmental conditions permitting the conidia to germinate and antagonize the disease causing parasite.

The spore concentration of the composition is preferably about $10^6$ spores per ml of composition; however, Lower concentrations can be effective as can higher concentrations. Higher conidia concentration are also desirable if the composition is to take the form of a concentration which can be diluted with water before spraying.

Upon application of the composition to the infected plants, the Stephanoascus spores adhere to the surface of the leaf and, if the environmental conditions are right, begin to germinate. The germinated Stephanoascus species commence antagonizing the disease causing organism. It is believed that this antagonism is caused by an enzyme or toxic agent which is secreted by the Stephanoascus. This agent interferes with the growth and development of the disease organism. This antagonism causes the death of the disease parasite often within 48 hours of spore application, provided the environmental conditions such as temperature and humidity are appropriate.

The Stephanoascus species flocculosus and rugulosus are superior biocontrol agents for a variety of reasons. As well as being fast acting, their optimum growing temperature of 26° C is close to the optimum growing temperature of several commercially grown crops such as cucumber. Their optimum humidity of greater than 80% is also close to the optimum for several commercially grown crops such a cucumbers. They are easy to culture and compositions comprising vital spores of these species can be easily produced in large quantities. The species are colourless and are therefore nearly invisible on fruits, flowers and leaves. The species can live saprophytically on the treated plants, therefore the treated plants would be continuously protected against a variety of plant pathogens. The species also have good rhizosphere compatibility which is a prime requisite for the control of root disease organisms. The species and compositions containing one or both of the species are universally applicable, although they appear best suited for greenhouse use because the environment in greenhouses can be easily controlled. Furthermore, once applied effective populations of the species can be sustained in greenhouses.

The following examples are given as an illustration of the invention.

### Example 1

Composition number 1 was prepared from a ten day old culture of Stephanoascus flocculosus grown on 2% malt extract agar. The culture was washed with sterile water, the sterile water being the carrier, and the conidia concentration of the suspension was adjusted to approximately $10^6$ conidia per ml of suspension. Composition number 2 was prepared in the same manner from ten day old Stephanoascus rugulosus cultures.

Cucumber leaf disks were cut from fully expanded leaves of cucumber (cv. Harliton Seedless) which were grown in a greenhouse and were infected with powdery mildew. Approximately half of the area of each leaf disk was covered by the mycelium of the species Sphaerotheca fuliginea.

The effectiveness of the compositions 1 and 2 under a variety of temperatures and humidities was then tested.

### Effect of Temperature

To determine the effect of temperature, leaf disks were placed on moist filter paper in each of eighteen petri dishes. The disks in twelve such dishes were sprayed with either composition 1 or composition 2, the remaining six dishes were sprayed with distilled water to act as controls. One dish from each treatment was incubated 14, 18, 22, 26,30 or 34° C. These samples were observed at 24 hour intervals over a 72 hours time period to assess antagonism. The degree of antagonism was determined by measuring the degree to which the mildew mycelium was colonized by the respective Stephanoascus species using an arbitrary scale defined as follows:

| Score | Percentage of Growth over the Powdery Mildew |
|---|---|
| 1 | 1 - 20% |
| 2 | 21 - 40% |
| 3 | 41 - 60% |
| 4 | 61 - 80% |
| 5 | 81 - 100% |

The results of the tests are graphically depicted in Figures 5 and 6. The response of the two species to temperature was similar. Stephanoascus flocculosus was the fastest colonizer, achieving complete overgrowth of the mildew mycelium in a minimum of 24 hours. Stephanoascus rugulosus was also effective against the powdery mildew, but Stephanoascus rugulosus took at least 48 hours to achieve complete overgrowth. As seen from Figures 5 and 6, the optimum temperatures for both Stephanoascus species was approximately 26°C, the effectiveness of both compositions decreasing markedly beyond 30°C and below 22°C.

Effect of Relative Humidity

To determine the effectiveness of the compositions under a variety of relative humidities, five cucumber leaf disks were placed in each of eighteen petri dishes. The leaf disks in six of the petri dishes were sprayed with composition 1, six other samples being treated with composition number 2 and the remaining six samples being sprayed with distilled water. The samples were then incubated at 26°C at six different levels of humidity; one of each sample being held at a relative humidity of 50%, 60%, 70%, 80% 90% and 100%. The degree of colonization was assessed after twelve hours and then every 24 hours up to 96 hours. The experiment was repeated and the results represent the average ratings form ten leaf disks from each treatment.

The results of the humidity tests for compositions 1 and 2 are shown in Figures 7 and 8 respectively. As can be seen from Figures 7 and 8, compositions 1 and 2 were not effective at relative humidities below 60%; however, at relative humidities approaching 100% both compositions were very effective, with composition 1 being faster acting at relative humidities above 80%.

Under optimum conditions of temperature and humidity, significant antagonism of powdery mildew was observed within 12 hours. Figures 3 and 4 were then taken from the test samples, and as can be seen in both figures the mycelium and conidia of the powdery mildew had collapsed within 12 hours. Within 24 hours, the mycelium and conidia of the powdery mildew were thoroughly covered by closely addpressed mycelium and conidia of the antagonist Stephanoascus species. The rapid collapse of a the powdery mildew cells suggest that the antagonist species produces an enzyme or some other toxin which alters the normal functions of the host fungus. It is believed that this in turn releases nutrients from the host cells which is utilized as nourishment by the antagonist species.

Composition 1 comprising spores of Stephanoascus flocculosus appears to be more effective and faster acting than composition number 2. An alternative composition comprising spores of both species would also be effective. The compositions appear to require a relative humidity in excess of 70% and temperatures in excess of 22°. These environmental factors can easily be achieved in greenhouses; hence, these compositions would be particularly effective in controlling plant diseases such as powdery mildews in greenhouse crops. Warm temperatures and high relative humidities are not found exclusively in greenhouses, and it is expected that these compositions would be effective on outdoor crops as well. Indeed, once treated a plant would be protected against plant diseases such as powdery mildew because viable spores of the Stephanoascus species would remain on the surface of the plant. This provides the added advantage of treating a crop plant early on in the season while maintaining effective pest control throughout the growing season and well into harvesting.

**Example 2**

The method of Example 1 was repeated on samples of miniature roses infected with Sphaerotheca pannosa var. rosae. Four individual leaflets were place on moist filter paper in each of eight petri dishes. The individual leaflets were selected such that half of the area of each leaflet was covered by mycelium of the powdery mildew. The leaflets in six of the petri dishes were sprayed with a conidia suspension of Stephanoascus flocculosus, Stephanoascus rugulosus or with a conidia suspension of Tilletiopsis washingtonensis. Tilletiopsis washingtonensis was obtained from the University of Albert micro-fungus collection (UAMH-1738). Two dishes were sprayed with sterile distilled water to act as controls. In order to observe epiphytic growth of the fungi, this regimen was repeated for all three fungi on leaflets fee of the disease. The samples were then incubated at 25° C, and the leaflets were observed at 24 hour intervals for a period of 96 hours. All three antagonists developed profusely on both the conidia and mycelium of Sphaerotheca pannosa ver. rosae. Stephanoascus flocculosus was the fastest acting overgrowing the conidia and mycelium of Sphaerotheca pannosa var. rosae within 24 hours. Both Stephanoascus flocculosus and Stephanoascus rugulosus grew readily on the disease-free leaflets, but the disease-free leaflets did not support a epiphytic growth of Tilletiopsis washingtonensis.

It is clear from these test results that a composition comprising vital spores of Stephanoascus flocculosus and/or Stephanoascus rugulosus together with a suitable carrier, would be effective in controlling powdery mildew on roses. Because Stephanoascus flocculosus and Stephanoascus rugulosus can grow on disease fee plant leaves, effective long term protection of the plant against powdery mildews can be achieved by a one time application of the composition. This long term protection of plants against plant pathogens such as powdery mildews is a necessary requirement for an effective control against the plant pathogens, especially in several commercially grown plants such as cucumbers and roses which can be harvested periodically and are susceptible to infection right until harvesting.

## Example 3

In order to determine the effectiveness of Stephanoascus flocculosus against a variety of plant pathogens, preliminary in-vitro tests were conducted by growing Stephanoascus flocculosus in micro-biological media together with the plant pathogen. Antagonism is indicated by a zone of inhibited pathogen growth, the width of the no-growth zone give a measure of the potency of the antibiotic interaction.

Fifty-six petri dishes were prepared having a yeast-malt-peptone-dextros growth medium. The test dishes were divided into fourteen groups of four, each group being seeded with one of fourteen different test organisms. Agar disks were cut from growing Stephanoascus flocculosus colonies and placed in the centre of each agar plate and the plates were then incubated for a period of seventy-two hours with the plates being examined every twenty-four hours. The radius of the no-growth zone surrounding the central Stephanoascus flocculosus colony in each of the plates was measured. The results of these in-vitro tests are summarized in the following table.

## TABLE

| Test Organism | Average Radius (mm) |
|---|---|
| _Rhizopus sp._ (common mould) | 1.9 > 0.25 |
| _Pythium aphanidermaturn_ (root rot) | 2.1 > 0.85 |
| _Saccharomyces cerevisiae_ (brewers yeast) | 4.0 > 0.8 |
| _Aspergillus aculeatus_ (grape berry rot) | 5.4 > 3.5 |
| _Botrytis cinerea_ (grey mould of grapes) | 8.3 > 1.5 |
| _Verticillium dahliae_ (wilt) | 8.5 > 1.3 |
| _Rhizoctonia solani_ root & stem rot) | 13.5 > 1.5 |
| _Penicillium expansum_ (citrus rots) | 4.5 > 0.6 |
| _Alternaria alternata_ | 1.0 > 1.4 |
| _Fusarium oxysporum_ (tomato wilt) | 6.5 > 0.6 |
| _Psudomonas tomato_ (tomato bacterial speck) | 0 |
| _Phytophthora megasperma_ (soy bean root rot) | 0 |
| _Clavibacter michiganense_ sub sp. _michiganense_ (tomato bacterial canker) | 11.3 > 0.86 |
| _Bacillus pumilus_ | 10.0 > 1.4 |

As can be seen from the above table Stephanoascus flocculosus has been an antagonistic effect upon a wide variety of pathogens and is a particularly strong antagonist to Rhizoctonia solani as well as Clavibacter michiganese. Stephanoascus flocculosus had little or no effect on the gram negative bacterium Pseudomonas tomato, nor on Phytophthora megasperma and the common mould Rhizopus sp. Gram positive bacteria seems particularly sensitive to antagonism by Stephanoascus flocculosus as can be seen from the marked antagonism to Bacillus pumilus and Clavibacter michiganese.

These test results indicate that a composition comprising spores of Stephanoascus flocculosus together with a suitable carrier would under appropriate environmental conditions be an effective treatment against a wide variety of bacterial and fungal plant diseases, particularly to root rot, wilts and tomato bacterial canker. The composition may take a variety of forms depending largely upon the carrier used; however, it is believed that liquid compositions for dipping young seedlings, and solid or liquid compositions for coating seeds, would be particularly useful for protecting young developing plants. These seed coatings and dips would be particularly useful in controlling plant pathogens which attack the roots of the plant, such as Rhizoctonia solani, Verticillium dahliae and Fusarium oxysporum. Protective seed coatings would also protect tomato plants against seed born bacterial cankers, a disease with no effective chemical control.

**Example 4**

In order to control root rots and wilts by the application of Stephanoascus flocculosus together with an appropriate carrier, Stephanoascus flocculosus must survive in soil for a period of several weeks. Tests were conducted in order to determine the effectiveness of the above composition as a preventative root dip against a variety of plant diseases and to test the rhizosphere compatibility of Stephanoascus flocculosus.

The roots of tomato seedlings were dipped into a composition comprising vital spores of Stephanoascus flocculosus and water, the composition having a spore concentration of 5x10⁶ spores per ml. The seedlings were transplanted into pots of sterile soil. After two days, aqueous suspensions of Fusarium oxysporum f.sp. radicislycopersici, and Verticillium dahliae, were added to the soil surrounding the tomato seedlings. As a control, tomato seedlings not treated with the Stephanoascus flocculosus composition were similarly inoculated with the tomato pathogens. The plants were left for 4 weeks, at the end of which the plants were uprooted and the roots washed with water. Samples of the washings were placed onto malt extract-yeast extract agar to test for the presence of Stephanoascus flocculosus.

Plants which were not treated with the Stephanoascus flocculosus composition showed typical symptoms of Verticillium wilt and Fusarium wilt respectively. Eight week old plants pre-inoculated with Stephanoascus flocculosus at four weeks showed no development of either Verticillium wilt or Fusarium wilt. The washings obtained from plants that were pre-treated with Stephanoascus flocculosus and then incubated for four weeks to six weeks showed the presence of vital Stephanoascus flocculosus. This indicates that Stephanoascus flocculosus lives within the soil for at least four to six weeks following treatment.

From soil studies that were conducted, it can be determined that seedlings treated with a composition of Stephanoascus flocculosus spores together with an appropriate carrier, either in the form of a dip or seed coating, would be protected against bacterial and fungal root diseases for the vital first six weeks of the seedlings' life.

To form a seed coating, a dry carrier could be used although a liquid carrier may also be appropriate. Appropriate carriers as well as appropriate methods for the coating of seed are well known in the art.

It is also apparent that a composition comprising an acceptable carrier together with an effective concentration of the antibody produced by either Stephanoascus flocculosus or Stephanoascus rugulosus would be effective in treating plants against a variety of plant pathogens. Such a composition could be made by first growing a culture of Stephanoascus flocculosus and/or Stephanoascus rugulosus in a liquid medium, then separating the yeast from culture medium. This culture medium could then be applied to plants. Alternatively, the antibiotic could be isolated and mixed with an appropriate carrier using techniques well known in the art.

While the present invention has been described and illustrated with respect to the preferred embodiments, it should be understood that numerous variations of these embodiments by be made without departing from the scope of the invention, which is defined in the appended claims.

## Claims

1. A composition for the control of bacterial and fungal plant diseases, said composition comprising an effective amount of vital spores of at least one of the species of yeasts selected from the group consisting of Stephanoascus flocculosus and Stephanoascus rugulosus together with an agronomically acceptable carrier.

2. A composition defined in claim 1, wherein the species is Stephanoascus flocculosus.

3. The composition defined in claim 1, wherein the species is Stephanoascus rugulosus.

4. The composition defined in claim 1, wherein the composition comprises spores of both species.

5. The composition defined in claim 1, wherein the carrier is water.

6. The composition defined in claim 1, wherein the carrier is water and the concentration of the spores is between 10⁵ to about 10⁷ spores per ml of composition.

7. The composition defined in claim 1, wherein the carrier is a powder.

8. A composition for the control of powdery mildew and other fungal plant diseases comprising an effective amount of vital spores of at least one species of yeast selected from the group consisting of Stephanoascus flocculosus and Stephanoascus rugulosus together with an agronomically acceptable carrier.

9. A process for controlling bacterial and fungal plant diseases, comprising the steps of applying a composition of vital yeast spores onto the plants to be treated, said composition comprising spores of at least one of the species of yeasts selected from the group consisting of Stephanoascus flocculosus and Stephanoascus rugulosus together with an agronomically acceptable carrier.

10. The process of controlling bacterial and fungal plant diseases defined in claim 9, wherein the treated plants are held under environmental conditions selected to permit the germination of the spores after treatment.

11. The process of controlling bacterial and fungal plant diseases defined in claim 10, further comprising the step of maintaining the treated plants at a temperature of between about 22°C to about 34°C and a relative humidity of between 70% and about 100% for a period of at least 12 hours after the application of the composition.

12. A process of controlling powdery mildew and wilt diseases on cucumber, rose and tomato plants comprising the steps of applying a composition of vital spores of the yeast Stephanoascus flocculosus together with an agronomically acceptable carrier onto the plants to be treated.

13. A composition for the control of bacterial and fungal plant diseases, said composition comprising an effective amount of anti-biotic produced by at least one of the species of yeasts selected from the group consisting of Stephanoascus flocculosus and Stephanoascus rugulosus, together with an agronomically acceptable carrier.

FIG. 1

FIG.2

FIG.3

FIG.4

FIG.5

FIG.6

FIG.7

FIG.8

European
Patent Office

**EUROPEAN SEARCH
REPORT**

Application Number

**EP 91 10 3468**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | BIOLOGICAL ABSTRACTS, vol. 87, no. 12, 15th June 1989, abstract no. 130249, Philadelphia, PA, US; W.R. JARVIS et al.: "Factors affecting antagonism of cucumber powdery mildew by Strephanoascus flocculosus and Stephanoscus rugulosus", & MYCOL. RES. 92(2): 162-165. 1989 * Abstract * | 1-13 | A 01 N 63/04 |
| X | PHYTOPATHOLOGY, vol. 80, no. 1, January 1990, page 117, St. Paul, US; R.R. BELANGER et al.: "Microscopic study of the interaction between Shaerotheca pannosa f.sp. Rosae and three potential antagonists", & ANNUAL MEETING OF THE AMERICAN PHYTOPATHOLOGICAL SOCIETY, NORTHEASTERN DIVISION, 1st - 3rd November 1989 | 1-13 | |
| A | BIOLOGICAL ABSTRACTS, vol. 86, no. 5, 1st September 1988, abstract no. 45476, Philadelphia, PA, US; J.A. TRAQUAIR et al.: "New species of Stephanoascus with Sporothrix anamorphs", & CAN. J. BOT. 66(5): 926-933. 1988 * Abstract * | 1-13 | |

TECHNICAL FIELDS
SEARCHED (Int. Cl.5)

A 01 N

The present search report has been drawn up for all claims

| Place of search | Date of completion of search | Examiner |
|---|---|---|
| The Hague | 06 May 91 | LAMERS W. |